# EUROPEAN PATENT SPECIFICATION

(11) **EP 0 454 887 B1**
(45) Date of publication and mention of the grant of the patent: **10.01.1996**
(21) Application number: 90108377.4
(22) Date of filing: 03.05.1990
(51) Int. Cl.: B01D 57/02

(54) **Procedure for separating plastic particles electrically from solutions, in particular from cellulose and paper fibre solutions**
Verfahren für die elektrische Trennung von Kunststoffpartikeln in Lösungen, insbesondere in Lösungen von Zellulose und Papierfasern
Procédé pour séparer électriquement des particules de matière plastique en solution, en particulier de solutions de cellulose et de fibre de papier

(43) Date of publication of application: 06.11.1991
(73) Proprietor: SAVCOR-CONSULTING OY, SF-50100 Mikkeli (FI)
(72) Inventor: Pulliainen, Martti, SF-52100 Anttola (FI); Ainali, Markku, SF-50500 Mikkeli (FI); Savisalo, Hannu, SF-50100 Mikkeli (FI)
(74) Representative: Tiedtke, Harro, Dipl.-Ing.

(56) References cited:
- DE-A- 3 227 874
- FR-A- 2 561 129
- GB-A- 1 525 103
- US-A- 4 671 860
- PATENT ABSTRACTS OF JAPAN, vol. 11, no. 72 (P-554)[2519], 5th March 1987;& JP-A-61 233 354 (JAPAN SPECTROSCOPIC CO.) 17-10-1986

## Description

The present invention concerns a procedure for separating plastic particles electrically from solutions, in particular from cellulose and paper fibre solutions.

In addition, the invention concerns a means for applying said procedure.

Document JP-A-61 233 354 discloses a cell separation apparatus comprising a reference electrode by means of which the voltage applied to further electrodes is controlled. The reference electrode is, however, not contained in the same solution.

Furthermore, the FR-A-2 561 129 relates to the separation of bacteria from solutions by means of at least one electrode inserted into the solution. The potential of the electrode is maintained at a polarity opposite to the charge of the bacteria to be separated.

A reference electrode may additionally be inserted which is used by a potentiostatic or potentiodynamic means for controlling the voltage of the separation electrode.

Additionally, document GB-A-1 525 103 suggests to use an anode and a cathode in order to concentrate polyvinylchloride emulsions. Thereby, a direct potential of the order of 2 to 16 volts is applied between the anode and the cathode. According to this document, the deposition rate increases when the voltage between the anode and the cathode is increased.

Finally, document US-A-4 671 860 discloses a procedure for removing water from a solution containing dispersed plastic particles. The water is drawn through filters by means of the suction force produced by a vacuum. The filters are prevented from getting blocked with possibly deposited plastic particles by means of an applied voltage. The plastic particles accumulate on electrodes, which are oppositely charged compared to the voltage applied to the filters. By taking the electrodes out of the solution, the plastic particles can be removed.

However, this procedure is rather complex and requires vacuum generating means to remove the water. Furthermore, it does not deal specifically with plastic particles.

Thus, electrical procedures of the prior art for removing harmful plastic have been used primarily only in connection with some clarification procedures of waste water, flotation and with some plastic testing procedures. The removal of plastic from among cellulose fibres has, instead, been based primarily on the density of plastic, either in a liquid phase or in centrifugal procedures.

Plastic is present as a harmful substance among certain liquid substances, such as cellulose. The object of the present invention is to disclose a procedure for separating plastic from among this kind of liquid substances. The electrical conductivity of plastic is in general poor because the plastics are insulating materials. The surface resistance of the plastic varies within the range of 10¹⁰ to 10¹⁶ Ω, because of which the adhesion properties of the plastics are poor, and their moistening is difficult. Because of the poor electrical conductivity, local charged areas are left in plastics in general as a result of working, abrasion and other treatments. In plastics the mobility of electrons is poor because of which the potential differences in different parts of the product are not able to discharge.

The plastics constitute an electrical voltage series of their own, which is presented roughly in Table 1.

**Table 1**

| Triboelectric series | |
|---|---|
| + | Rabbit hair |
| | Bacelite |
| | Cellulose acetate |
| | Glass |
| | Quartz |
| | Hair |
| | Wool |
| | Nylon 6 |
| | Nylon 66 |
| | Cat hair |
| | Viscose |
| | Cotton |
| | Leather |
| | Wood |
| | Paper |
| | Amber |
| | Metals |
| | PVC |
| | Ebonite |
| | Polystyrene |
| | Polyethene |
| | Teflon |
| - | Cellulose nitrate |

The object of the procedure of the present invention is to remove harmful plastic particles electrically from liquid substances in a simple manner.

This object is achieved by a procedure as claimed in claim 1.

The procedure and the means of the invention are described below in detail, reference being made to the figures of the annexed drawing, in which
Fig. 1 presents the result graph of a test series, wherein the procedure of the invention was employed,
Fig. 2 schematically presents the apparatus suitable for carrying out the invention.

In the procedure of the invention a liquid substance containing harmful plastic particles is conducted to pass between two electrodes or in the vicinity thereof. Hereby, the harmful plastic particles adhere to one of the electrodes. Various kinds of plastic need for the adherence to the electrode different electrode potentials. The potential of the anode is at the most 2800 mV S.C.E., or the potential of the cathode is at least -3500 mV S.C.E.

The procedure of the invention may be intensified by producing selectively gas production on the electrodes, which takes place by controlling the potentials of the electrodes advantageously.

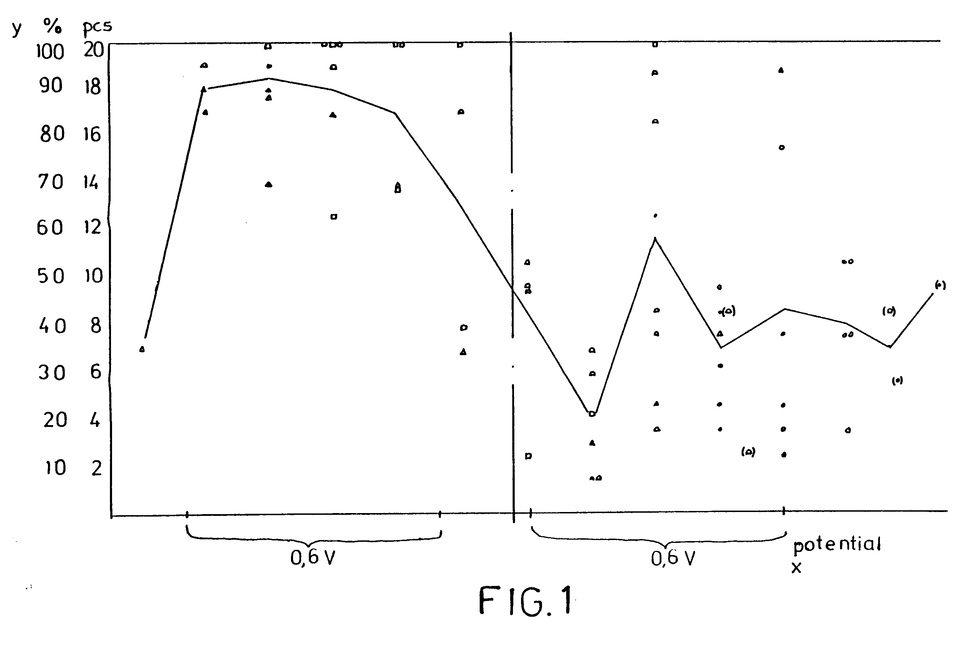

Fig. 1 presents the results of a test series in which the procedure of the invention was used. In the test series, stainless steel was used for cathode material, and an aqueous solution contained harmful particles. In test series was used 45° angle by buoyancy. The X axis in the figure depicts the potential and the Y axis the number of plastic particles adhered to an electrode as well as the percentage proportion of the particles adhered to the electrode of the total number of particles in the solution. It is shown in the figure that at certain values of the potential, almost all plastic particles became adhered to the electrode. The following markings were used in the figure for presenting various tests.

| | | |
|---|---|---|
| Tests | 52 - 69 | ○ |
| | 70 - 77 | □ |
| | 78 - 91 | △ |
| | 92 - 114 | 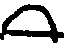 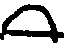 |

The material of the electrodes for use in the procedure is e.g. stainless CrNi steel, an aluminium mixture or copper- metal. In addition, electrodes made from inert metals or coated therewith are appropriate for use in connection with the procedure. The material of the electrodes may also be graphite or carbon fibre.

In particular in situations in which the liquid substance flows, the electrodes are installed in an optimum position, and an optimum configuration is selected for said electrodes, e.g. lamellaic, reticular or plate-like configuration.

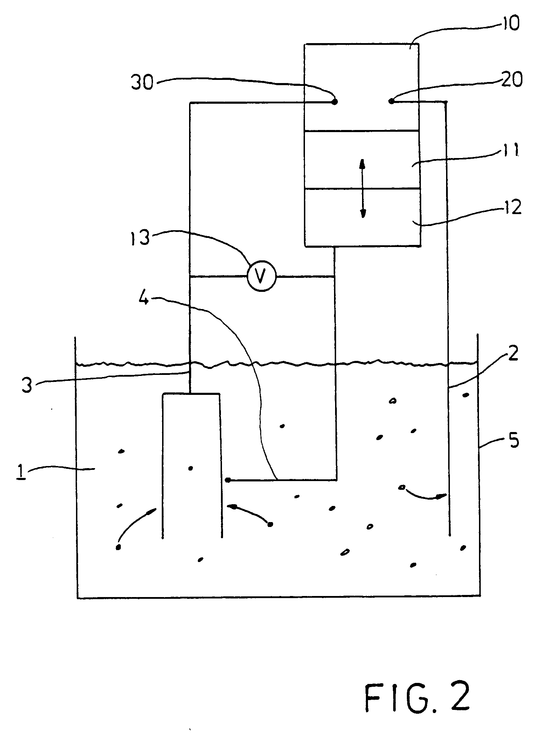

In Fig. 2 is presented a means intended for applying the procedure of the invention. As shown in the figure, the liquid substance 1 containing plastic particles is placed in a container 5 or equivalent. By means of a power supply 10, a voltage is provided through poles 20 and 30 to electrodes 2 and 3, resp. When a potential difference exists between the electrodes 2 and 3, the particles adhere to the electrode provided with appropriate potential. By the aid of a reference electrode 4, the potential of the other electrode is monitored, and the information is transmitted to a data unit 12, which transmits the measuring results further to a conclusion unit 11. The conclusion unit 11 controls the functioning of the power source 10 so that the requisite potentials on both of the electrodes are maintained appropriate. A voltmeter 13 is connected to one of the electrodes by the aid of which the voltage of said electrode is monitored.

In the means of the invention, the cleaning of the electrodes 2 and 3 can be carried out by so controlling the potential between the electrodes that vigorous gas formation takes place on the electrodes. This kind of potential differs considerably from the potential used in the separation process.

The invention is described in the foregoing referring only to one advantageous embodiment example. This, however, is in no way intended to confine the invention only to the present example, and several modifications are feasible within the scope of the claims below.

The present invention concerns a procedure for separating plastic particles from solutions, in particular from cellulose and paper fibre solutions. The plastic particles present in the solution (1) are separated electrically by inserting an anode and a cathode (2,3) into the solution, and a reference electrode (4), and by controlling the potential of the anode and the cathode (2 and 3) so that the potential of the anode is at most 2800 mV S.C.E. and that the potential of the cathode is at least -3500 mV S.C.E. The procedure is intensified by controlling the potentials of the electrodes (2,3) to such ranges by which gas procution is selectively provided on the electrodes (2,3).

## Claims

1. A procedure for separating plastic particles from solutions, **characterized in that** said plastic particles present in said solution **(1)** are separated electrically by inserting an anode and a cathode **(2 and 3)**, and a reference electrode **(4)** into said solution, and by controlling the potential of said anode and said cathode **(2 and 3)** so that said potential of said anode is at most 2800 mV S.C.E. or said potential of said cathode is at least -3500 mV S.C.E..

2. A procedure according to claim 1, **characterized in that** said procedure is intensified by controlling said potentials of said electrodes **(2, 3)** to ranges in which gas production is provided selectively on said electrodes **(2, 3)**.

3. A procedure according to claim 1 or 2, **characterized in that** said potential of said anode is most preferably from +1200 mV to - 300 mV S.C.E., or said potential of said cathode is most preferably from +120 mV to -2100 mV S.C.E..

4. A procedure according to any one of claims 1 to 3, **characterized in that** at least one of said electrodes **(2, 3)** resembles a lamella.

5. A procedure according to any one of claims 1 to 4, **characterized in that** at least one of said electrodes **(2, 3)** is reticular.

6. A procedure according to any one of claims 1 to 3, **characterized in that** at least one of said electrodes **(2, 3)** is plate-like.

7. A procedure according to any one of claims 1 to 6, **characterized in that** the material of said electrodes **(2, 3)** is at least partly stainless CrNi steel.

8. A procedure according to any one of claims 1 to 6, **characterized in that** the material of said electrodes **(2, 3)** is at least partly an aluminium mixture.

9. A procedure according to any one of claims 1 to 6, **characterized in that** the material of said electrodes **(2, 3)** is at least partly copper metal.

10. A procedure according to any one of claims 1 to 6, **characterized in that** the material of said electrodes **(2, 3)** is graphite or carbon fibre.

## Patentansprüche

1. Verfahren für die Abtrennung von Kunststoffteilchen von Lösungen,
**dadurch gekennzeichnet, daß**
die in der Lösung (1) vorhandenen Kunststoffteilchen durch Eintauchen einer Anode und einer Kathode (2 und 3) und einer Bezugselektrode (4) in die Lösung und durch Steuerung des Potentials der Anode und der Kathode (2 und 3) dergestalt, daß das Potential der Anode höchstens 2800 mV GKE oder das Potential der Kathode mindestens -3500 mV GKE beträgt, elektrisch abgetrennt werden.

2. Verfahren nach Anspruch 1,
**dadurch gekennzeichnet, daß**
das Verfahren durch Steuerung der Potentiale der Elektroden (2, 3) auf Bereiche, in denen auf den Elektroden (2, 3) selektiv eine Gaserzeugung stattfindet, intensiviert wird.

3. Verfahren nach Anspruch 1 oder Anspruch 2,
**dadurch gekennzeichnet, daß**
das Potential der Anode am bevorzugtesten +1200 mV bis -300 mV GKE oder das Potential der Kathode am bevorzugtesten +120 mV bis -2100 mV GKE beträgt.

4. Verfahren nach einem der Ansprüche 1 bis 3,
**dadurch gekennzeichnet, daß**
mindestens eine der Elektroden (2, 3) einer Lamelle gleicht.

5. Verfahren nach einem der Ansprüche 1 bis 4,
**dadurch gekennzeichnet, daß**
mindestens eine der Elektroden (2, 3) netzartig ist.

6. Verfahren nach einem der Ansprüche 1 bis 3,
**dadurch gekennzeichnet, daß**
mindestens eine der Elektroden (2, 3) plattenartig ist.

7. Verfahren nach einem der Ansprüche 1 bis 6,
**dadurch gekennzeichnet, daß**
das Material der Elektroden (2, 3) mindestens teilweise korrosionsbeständiger CrNi-Stahl ist.

8. Verfahren nach einem der Ansprüche 1 bis 6,
**dadurch gekennzeichnet, daß**
das Material der Elektroden (2, 3) mindestens teilweise eine Aluminiummischung ist.

9. Verfahren nach einem der Ansprüche 1 bis 6,
**dadurch gekennzeichnet, daß**
das Material der Elektroden (2, 3) mindestens teilweise Kupfermetall ist.

10. Verfahren nach einem der Ansprüche 1 bis 6,
**dadurch gekennzeichnet, daß**
das Material der Elektroden (2, 3) Graphit oder Kohlefaser ist.

## Revendications

1. Procédé pour séparer électriquement des particules plastiques de solutions, caractérisé en ce que les particules présentes dans la solution (1) sont séparées électriquement en introduisant une anode et une cathode (2 et 3), et une électrode de référence (4) dans la solution, et en contrôlant le potentiel de l'anode et de la cathode (2 et 3) de façon que le potentiel de l'anode soit au plus 2800 mV S.C.E. ou le potentiel de la cathode au moins - 3500 mV S.C.E..

2. Procédé selon la revendication 1, caractérisé en ce que le procédé est intensifié en contrôlant les potentiels des électrodes (2, 3) à des plages dans lesquelles du gaz est produit sélectivement sur les électrodes (2, 3).

3. Procédé selon la revendication 1 ou 2, caractérisé en ce que le potentiel de l'anode est de façon plus préférée de +1200 mV jusqu'à -300 mV S.C.E., ou le potentiel de l'anode est de façon plus préférée de +120 mV jusqu'à - 2100 mV S.C.E.

4. Procédé selon l'une quelconque des revendications 1 à 3, caractérisé en ce qu'au moins l'une des électrodes (2, 3) est lamellaire.

5. Procédé selon l'une quelconque des revendications 1 à 4, caractérisé en ce qu'au moins l'une des électrodes (2, 3) est réticulaire.

6. Procédé selon l'une quelconque des revendications 1 à 3, caractérisé en ce qu'au moins l'une des électrodes (2, 3) est en forme de plaquette.

7. Procédé selon l'une quelconque des revendications 1 à 6, caractérisé en ce que le matériau des électrodes (2, 3) est au moins partiellement de l'acier CrNi inoxydable.

8. Procédé selon l'une quelconque des revendications 1 à 6, caractérisé en ce que le matériau des électrodes (2, 3) est au moins partiellement un mélange d'aluminium.

9. Procédé selon l'une quelconque des revendications 1 à 6, caractérisé en ce que le matériau des électrodes (2, 3) est au moins partiellement du métal de cuivre.

10. Procédé selon l'une quelconque des revendications 1 à 6, caractérisé en ce que le matériau des électrodes (2, 3) est du graphite ou de la fibre de carbone
